# FASCICULE DE BREVET EUROPEEN

(11) **EP 0 812 297 B1**
(45) Date de publication et mention de la délivrance du brevet: **31.03.1999**
(21) Numéro de dépôt: 96901867.0
(22) Date de dépôt: 29.01.1996
(51) Int. Cl.: C01B 15/023

(54) **INSTALLATION DE PRODUCTION D'EAU OXYGENEE SUR LE SITE D'UNE PAPETERIE**
VORRICHTUNG ZUR HERSTELLUNG VON WASSERSTOFFPEROXID AM ORT EINER PAPIERFABRIK
PLANT FOR PRODUCING HYDROGEN PEROXIDE $i(IN SITU) IN A PAPER MILL

(30) Priorité: 28.02.1995 FR 9502318
(43) Date de publication de la demande: 17.12.1997
(73) Titulaire: ELF ATOCHEM S.A., 92800 Puteaux, Hauts-de-Seine (FR)
(72) Inventeur: LEDON, Henry, F-78000 Versailles (FR)
(86) Numéro de dépôt international: FR9600142
(87) Numéro de publication internationale: WO9626895

(56) Documents cités:
- WO-A-86/06710
- FR-A- 2 541 390
- GB-A- 718 307

## Description

La présente invention a pour objet une installation de production d'eau oxygénée sur le site d'une papeterie, du type comprenant un premier étage d'hydrogénation catalytique d'au moins un dérivé anthraquinonique en solution dans un mélange de solvants organiques appropriés, un second étage d'oxydation de la solution de travail hydrogénée obtenue, par injection d'un mélange gazeux comprenant de l'oxygène, tel que l'air, dans la solution de travail pour obtenir une solution de travail oxydée, et un troisième étage d'extraction de l'eau oxygénée de la solution de travail oxydée, par injection d'eau à contre-courant de la solution de travail oxydée, des moyens étant prévus pour injecter un gaz comprenant de l'hydrogène dans ledit premier étage et de l'air de secours dans le second étage.

Une telle installation est dite "on site" c'est-à-dire que le peroxyde d'hydrogène est produit sur le site même de son utilisation, en l'occurrence une usine de fabrication de pâtes chimiques, selon le procédé d'autoxydation d'une solution de travail comportant au moins un dérivé anthraquinonique.

Le dérivé anthraquinonique constitutif de la solution de travail est choisi de préférence parmi les 2 alkyl 9, 10 anthraquinones dans lesquelles le substituant alkyle comprend de 1 à 5 atomes de carbone, tel que les radicaux méthyle, éthyle, sec-butyle, tertio-butyle, tertio-amyle, iso-amyle, ainsi que les tétrahydro-5,6,7,8 correspondants, ou parmi les dialkyl 9,10 anthraquinones dans lesquelles les substituants alkyle identiques ou différents, comprennent de 1 à 5 atomes de carbone, tel que les radicaux méthyle, éthyle, tertiobutyle, par exemple 1,3 diméthyle, 1,4 diméthyle, 2,3 diméthyle, 2,7 diméthyle, 1,3 diéthyle, 2,7 ditertiobutyle, 2 éthyle 6 tertiobutyle et les dérivés tétrahydro-5,6,7,8 correspondants. Le solvant organique constitutif de la solution de travail est de préférence un mélange d'un composé non polaire et d'un composé polaire. Le composé non polaire est choisi de préférence parmi les coupes pétrolières à point d'ébullition supérieur à 140°C contenant majoritairement des hydrocarbures aromatiques comportant au moins 9 atomes de carbone, tel que les isomères du triméthylbenzène, les isomères du tétraméthylbenzène, le tertiobutylbenzène, les isomères du méthylnaphtalène, les isomères du diméthylnaphtalène. Le composé polaire est choisi de préférence parmi les alcools saturés comportant de préférence de 7 à 11 atomes de carbone, tels que le diisobutylcarbinol, le triméthyl-3,5,5 hexanol, l'isoheptanol, les esters d'acides carboxyliques tels que l'acétate de méthyle cyclohexyl commercialisé sous le nom de "Sextate", l'acétate d'heptyle, le benzoate de butyle, l'heptanoate d'éthyle, les esters de l'acide phosphorique tels que le phosphate de tributyle, le phosphate de tri (2 éthylbutyle), le phosphate de tri (2 éthyl hexyle), le phosphate de tri (n-octyle), les urées tétrasubstituées telle que la tétra (n-butyl) urée.

L'hydrogénation a lieu à une température habituellement comprise entre 50 et 70°C, la pression du gaz dans le ciel, qui régule le débit d'hydrogène, étant de 0,5 à 4 bar relatif, de préférence 0,8 à 1,5 bar. On obtient en sortie de l'hydrogénateur un équivalent compris entre 5 et 15 g/l, et de préférence de 7 à 10 g/l.

Par "équivalent peroxyde d'hydrogène", on entend la quantité de peroxyde d'hydrogène, exprimée en grammes, qu'un litre de solution de travail est susceptible de fournir à l'issue de l'étape d'oxydation si le rendement de cette étape dans l'oxydeur est de 100%. Cette concentration massique potentielle en peroxyde correspond à une concentration molaire qui est égale à la concentration molaire de l'ensemble des formes anthrahydroquinoniques réoxydables dans la solution de travail.

L'introduction de l'hydrogène est avantageusement réalisée par un distributeur, constitué d'un tube percé ou d'une plaque percée de trous d'un diamètre de 0,5 à 3mm, de préférence 1 à 2mm, permettant une vitesse d'éjection des gaz de 20 à 100 m/sec., de préférence 40 à 50 m/sec.

La solution hydrogénée obtenue est d'abord refroidie puis introduite à l'extrémité supérieure du second étage constituant l'oxydeur, tandis qu'un gaz contenant de l'oxygène, par exemple de l'air comprimé, est injecté à la base de ce dernier. L'air remonte dans l'oxydeur à contre-courant de la solution de travail qui descend au travers d'un garnissage approprié, ou de plateaux perforés.

Enfin la solution de travail oxydée est refroidie puis introduite à la base du troisième étage constituant l'extracteur d'eau oxygénée. La solution de travail est extraite, à contre courant, par de l'eau de préférence déminéralisée, introduite à la partie supérieure de l'extracteur. Le peroxyde d'hydrogène est récupéré à la sortie de l'extracteur tandis que la solution de travail est recyclée dans l'hydrogénateur. En sortie de la colonne d'extraction, le titre de peroxyde d'hydrogène en solution aqueuse est inférieur à 45%.

L'hydrogène est introduit au moyen d'un compresseur électrique. Or ces compresseurs comportent des pièces mobiles, exigeantes en entretien et qui soulèvent des problèmes de sécurité, tout particulièrement au niveau des dispositifs d'étanchéité, qui sont susceptibles de laisser passer des fuites d'hydrogène ou des entrées d'air.

En cas de mise en arrêt de l'installation, on injecte de l'azote d'inertage dans l'hydrogénateur et le fluide gazeux prélevé au sommet de l'hydrogénateur est recirculé par ce même compresseur et réinjecté en bas de l'hydrogénateur, pour permettre de garder le catalyseur en suspension.

Par ailleurs, selon la technique antérieure, l'hydrogène est introduit dans l'hydrogénateur par un diffuseur, constitué généralement d'une plaque poreuse dans laquelle les trous sont de très petits diamètres, de l'ordre de quelques dizaines de microns. Il en résulte, sur cette surface froide, des risques de cristallisation de la solution de travail au niveau des trous par effet de vaporisation. Il est donc nécessaire de réchauffer préalablement le gaz contenant de l'hydrogène et de le saturer par le mélange des solvants, ce qui nécessite un investissement complémentaire.

Enfin, le processus de fabrication des pâtes chimiques dans une papeterie se traduit par la production permanente d'une quantité importante de vapeur d'eau comprimée, qui jusqu'à présent est restée partiellement valorisée.

L'invention a donc pour but de proposer une installation de production de peroxyde d'hydrogène sur le site d'une papeterie dans laquelle l'injection d'hydrogène ou d'azote d'inertage est assurée par des moyens qui augmentent la fiabilité de l'installation et sa sécurité, notamment en cas d'arrêt de l'alimentation en électricité de l'installation.

Conformément à l'invention, les moyens d'injection du gaz contenant de l'hydrogène comprennent un éjecteur constitué d'une tubulure à étranglement, relié à une conduite d'amenée d'hydrogène et à des moyens d'alimentation de cet éjecteur en vapeur d'eau sous pression provenant de la papeterie, de telle sorte que la vapeur d'eau entraîne l'hydrogène vers le premier étage.

Dans le cadre de la présente invention, on désigne par "gaz contenant de l'hydrogène", soit un flux gazeux constitué d'hydrogène pur, soit un mélange de gaz comprenant de l'hydrogène et un gaz inerte vis à vis de la solution de travail, tel par exemple, que l'azote.

La vapeur d'eau est produite par la papeterie à une pression moyenne de 10 à 15 bars et est toujours disponible sur le site. De ce fait en cas d'arrêt brutal de l'installation par panne d'électricité, la recirculation de l'azote d'inertage reste toujours assurée grâce à la mise en oeuvre de l'éjecteur.

D'autres particularités et avantages de l'invention apparaîtront au cours de la description qui va suivre, faite en référence aux dessins annexés qui en illustrent un mode de réalisation à titre d'exemple non limitatif.

La figure 1 est un schéma simplifié d'une installation conforme à l'invention de production de peroxyde d'hydrogène sur le site d'utilisation.

La figure 2 est une vue en coupe longitudinale et élévation, d'un éjecteur pouvant équiper l'installation de la Fig.1.

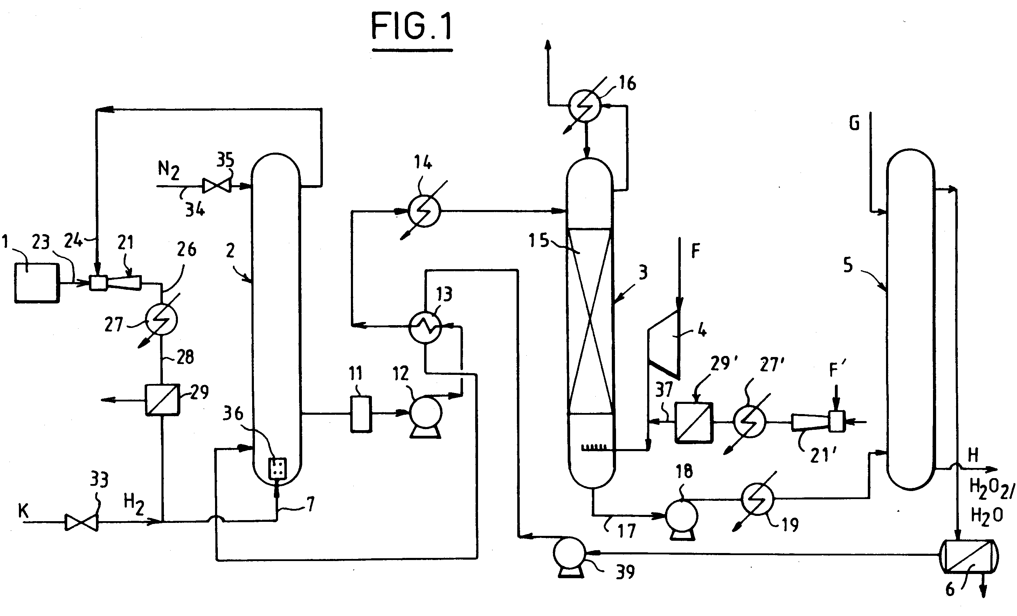

L'installation représentée schématiquement à la Fig.1 est destinée à la production d'eau oxygénée sur le site d'une papeterie 1 (production "on site").

Cette installation comprend un premier étage 2 d'hydrogénation d'une solution de travail comprenant au moins un dérivé anthraquinonique dans un mélange de solvants organiques, et un second étage 3 d'oxydation de la solution de travail hydrogénée obtenue, cette oxydation étant réalisée par injection d'air à la base de la colonne constituant l'oxydeur 3 (flèche F), via un compresseur 4, afin d'obtenir une solution de travail oxydée. Enfin cette unité de production comporte un troisième étage 5 d'extraction du peroxyde d'hydrogène par injection d'eau à contre-courant de la solution de travail montant de bas en haut dans la colonne extractrice 5. Le peroxyde d'hydrogène est recueilli à la partie inférieure de l'extracteur 5 (flèche H) et récupéré, à une concentration inférieure à 45%, de préférence inférieure à 20%. Après passage dans un coalesceur 6, la solution de travail extraite est recirculée par la pompe 39, réchauffée dans l'échangeur de chaleur 13 et introduite au bas de l'hydrogénateur.

De l'hydrogène frais d'appoint est injecté à la base de l'hydrogénateur 2 (flèche K) et mélangé dans une canalisation 7 avec le fluide gazeux de recirculation, contenant de l'hydrogène, qui est récupéré à la partie supérieure de l'hydrogénateur 2 avec lequel il constitue une boucle de circulation fermée 8. La solution de travail hydrogénée est recueillie à la base de l'hydrogénateur 2, traverse un système de filtres 11 puis est envoyée par une pompe 12 dans l'échangeur 13 et un réfrigérant 14, puis introduite dans la partie supérieure de l'oxydeur 3. Ce dernier contient un dispositif de contact gaz-liquide 15 tel que des garnissages en vrac, par exemple des anneaux de Raschig, ou des plateaux perforés. L'air épuisé est extrait à la partie supérieure de l'oxydeur 3, traverse un système de condensation 16 et est rejeté dans l'atmosphère, éventuellement après une épuration complémentaire. La solution de travail est recueillie à la base de l'oxydeur 3 par une canalisation 17, Injectée par une pompe 18 dans un réfrigérant 19, puis introduite à la partie inférieure de la colonne extractrice 5, qu'elle remonte à contre-courant d'eau déminéralisée introduite par la partie supérieure (flèche G).

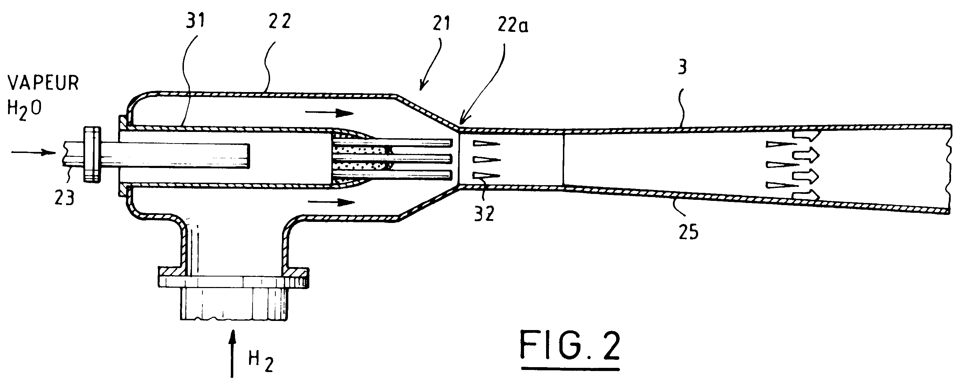

Des moyens sont prévus pour injecter l'hydrogène dans le premier étage 2. Ces moyens comprennent un éjecteur 21 par exemple du type commercialisé par la Société BERTIN. Cet éjecteur 21 est constitué d'une tubulure à étranglement, dont une chambre 22 (Fig.2) communique avec une canalisation 23 d'amenée de la vapeur d'eau sous pression provenant de la papeterie 1, ainsi qu'avec une conduite 24 d'alimentation en hydrogène de recirculation en provenance du haut de l'hydrogénateur 2. La vapeur d'eau disponible sur le site de la papeterie provient de la chaudière de récupération du salin des liqueurs noires, et est normalement à une pression moyenne comprise entre 10 et 15 bars comme déjà indiqué. La chambre 22 se termine à son extrémité opposée à la canalisation 23 par un étranglement 22a prolongé par un divergent 25, relié par une canalisation 26 à un condenseur 27, par exemple à eau. Ce dernier est lui même connecté par une conduite 28 à un séparateur de condensats 29, d'où le fluide contenant de l'hydrogène sort pour être introduit par la canalisation 7 à la base de l'hydrogénateur 2.

La chambre 22 de l'éjecteur 21 comprend, de manière connue en soi, une tubulure centrale 31, coaxiale à la conduite d'amenée 23 et dans laquelle débouche cette dernière. L'introduction de la vapeur d'eau sous pression dans la conduite 23 et la tubulure 31 aspire l'hydrogène enveloppant la tubulure 31, tes deux gaz se mélangeant juste après l'étranglement 22a dans un mélangeur 32. Le mélange se détend après passage de l'étranglement et est chassé par le divergent 25 dans la canalisation 26.

Une canalisation 34 prévue dans la partie haute du premier étage 2 d'hydrogénation, est pourvue d'une vanne 35 et permet d'injecter un gaz d'inertage tel que de l'azote dans le ciel gazeux de l'hydrogénateur 2. En cas de nécessité, cette vanne 35 peut être ouverte, tandis que la vanne 33 située sur la canalisation d'alimentation en hydrogène frais, en amont de la canalisation 7, est fermée. Ainsi en cas d'arrêt de l'unité de production de peroxyde d'hydrogène, il est possible de maintenir en sécurité l'installation et d'éviter que le catalyseur contenu dans l'hydrogénateur 2 sédimente, ce qui facilite son redémarrage.

L'hydrogène est injecté à la base du premier étage 2 par un distributeur 36, réalisé de manière connue en soi par une plaque ou par un tube percé de trous ayant chacun un diamètre d'environ 0,5 à 3mm, et de préférence 1 à 2mm, et non par une plaque poreuse comme dans la technique antérieure. Ces trous permettent une vitesse d'éjection des gaz de 20 à 100 m'sec, de préférence 40 à 50 m/sec.

En cas de panne mécanique du compresseur 4 ou d'un arrêt d'alimentation électrique de l'unité, l'air n'est plus introduit dans l'oxydeur. En cas de panne prolongée il est donc prévu une alimentation en air de secours par une canalisation 37, à partir d'une source d'air non représentée. Il est en effet nécessaire d'introduire alors de l'air de secours dans l'oxydeur 3 pour oxyder la solution de travail réduite présente dans la boucle. Or, en cas d'arrêt de l'installation consécutif à une interruption d'alimentation électrique, il n'est pas économiquement possible de disposer d'un générateur électrique auxiliaire pour alimenter le compresseur d'air. Une caractéristique complémentaire de l'invention prévoit alors de réaliser cette injection d'air de secours par un dispositif éjecteur constitué d'un éjecteur 21', d'un condenseur 27', et d'un séparateur de condensats tel que 29', relié à la canalisation 37, dans lequel la vapeur d'eau se condense et d'où le gaz peut être injecté dans l'étage associé 3. Ce dispositif peut assurer l'alimentation en air de secours par la canalisation 37 grâce à l'utilisation de la vapeur d'eau sous pression qui provient de la papeterie 1 par une liaison non représentée, jusqu'à l'éjecteur 21'.

La solution de travail récupérée par le coalesceur 6 est recyclée, via une pompe 39 et le réfrigérant 13, dans l'hydrogénateur 2 comme représenté à la Fig.1.

Selon une forme de réalisation simplifiée de l'invention, l'installation peut être équipée uniquement d'un éjecteur 21 d'hydrogène sans le second éjecteur assurant l'alimentation en air de secours.

En fonctionnement normal, la vanne 35 est fermée. Si l'installation est arrêtée, on remplace l'injection d'hydrogène par une injection d'azote d'inertage en ouvrant la vanne 35 et en fermant la vanne 33.

En cas d'arrêt brutal de l'alimentation électrique, les deux éjecteurs d'hydrogène et d'air de secours améliorent la sécurité et la fiabilité de l'installation, car la vapeur d'eau sous pression est toujours disponible sur le site de la papeterie 1, et peut donc assurer en permanence l'alimentation de l'hydrogénateur 2 en azote d'inertage et de l'oxydeur 3 en air de secours.

Par ailleurs, l'agencement du distributeur d'hydrogène 36 décrit ci-dessus évite tout risque de cristallisation de la solution de travail au niveau des trous par effet de vaporisation, comme cela peut se produire avec les diffuseurs poreux utilisés jusqu'à présent. Ainsi il devient possible de supprimer le système de saturation en solvants de l'hydrogène d'appoint qui était nécessaire jusqu'à présent, avec les diffuseurs habituels. Il en résulte une économie dans la réalisation de l'installation.

Enfin, il est à noter que le même système d'éjecteur à vapeur 21 peut être utilisé soit pour l'alimentation de l'hydrogénateur 2 en hydrogène, soit pour son alimentation en azote d'inertage.

L'invention n'est pas limitée aux formes de réalisations décrites ci-dessus et peut comporter diverses variantes d'exécution.

## Revendications

1. Installation de production d'eau oxygénée sur le site d'une papeterie, comprenant un premier étage (2) d'hydrogénation catalytique d'au moins un dérivé anthraquinonique en solution dans un mélange de solvants organiques, un second étage (3) d'oxydation de la solution de travail hydrogénée obtenue, par injection d'un mélange gazeux comprenant de l'oxygène, tel que l'air, dans la solution de travail pour obtenir une solution de travail oxydée, et un troisième étage (5) d'extraction de l'eau oxygénée de la solution de travail oxydée, par injection d'eau à contre-courant de la solution de travail oxydée, des moyens étant prévus pour injecter un gaz comprenant de l'hydrogène dans ledit premier étage et de l'air de secours dans le second étage, caractérisée en ce que lesdits moyens d'injection du gaz contenant de l'hydrogène comprennent un éjecteur (21) constitué d'une tubulure à étranglement, reliée à une conduite (24) d'amenée d'hydrogène et à des moyens (23) d'alimentation de cet éjecteur en vapeur d'eau sous pression provenant de la papeterie (1), de telle sorte que la vapeur d'eau entraîne le gaz contenant de l'hydrogène vers le premier étage en se détendant après passage de l'étranglement.

2. Installation selon la revendication 1, caractérisée en ce que le premier étage (2) d'hydrogénation est muni dans sa partie haute, d'une canalisation (34) pourvue d'une vanne (35) reliée à une source de gaz d'inertage, pour permettre l'injection d'un gaz d'inertage dans le ciel gazeux du premier étage (2).

3. Installation selon la revendication 1 ou 2, caractérisée en ce que lesdits moyens d'injection d'air de secours comprennent un second éjecteur (21'), relié à une conduite (37) d'amenée d'air de secours dans le second étage (3) et à des moyens d'alimentation de cet éjecteur en vapeur d'eau sous pression provenant de la papeterie (1), de telle sorte qu'en cas de besoin la vapeur d'eau puisse entraîner l'air de secours vers le second étage (3).

4. Installation selon l'une quelconque des revendications 1 à 3, caractérisée en ce que chaque éjecteur (21, 21') débouche à sa sortie dans un condenseur (27, 27') lui-même connecté à un séparateur de condensats (29, 29') dans lequel la vapeur d'eau se condense et d'où le gaz est injecté dans l'étage associé (2 ou 3).

5. Installation selon l'une quelconque des revendications 1 à 4, caractérisée en ce que le premier étage (2) est pourvu d'un distributeur d'hydrogène constitué d'une plaque ou d'un tube (36) percé de trous d'un diamètre d'environ 0,5 à 3mm.

## Claims

1. Plant for the on-site production of hydrogen peroxide in a paper mill comprising a first stage (2) for the catalytic hydrogenation of at least one anthraquinone derivative dissolved in a mixture of organic solvents, a second stage (3) for oxidizing the hydrogenated working solution obtained, by injecting a gaseous mixture containing oxygen, such as air, into the working solution to obtain an oxidized working solution, and a third stage (5) for extracting hydrogen peroxide from the oxidized working solution, by injecting water countercurrently to the oxidized working solution, means being provided for injecting a gas containing hydrogen into the said first stage and back up air into the second stage, characterized in that the said means for injecting the gas containing hydrogen comprise an ejector (21) consisting of a throttle tube connected to a conduit (24) for introducing hydrogen and means (23) for supplying this ejector with steam under pressure provided by the paper mill (1), so that the steam carries the gas containing hydrogen to the first stage while being expanding after passing through the throttle.

2. Plant according to claim 1, characterized in that the first hydrogenation stage (2) is provided in its upper part with a pipeline (34) provided with a valve (35) connected to a source of inerting gas, so that an inerting gas can be injected into the gas-containing top of the first stage (2).

3. Plant according to claim 1 or 2, characterized in that the said means for injecting back up air comprise a second ejector (21') connected to a conduit (37) for introducing back up air into the second stage (3) and means for supplying this ejector with steam under pressure provided by the paper mill (1), so that in case of need the steam can carry the back up air to the second stage (3).

4. Plant according to any one of claims 1 to 3, characterized in that each ejector (21, 21') emerges at its outlet into a condenser (27, 27') itself connected to a separator for condensates (29, 29') in which the steam condenses and from where the gas is injected into the associated stage (2 or 3).

5. Plant according to any one of claims 1 to 4, characterized in that the first stage (2) is provided with a hydrogen distributor consisting of a plate or a tube (36) perforated with holes having a diameter of approximately 0.5 to 3 mm.

## Patentansprüche

1. Vorrichtung zur Produktion von Wasserstoffperoxid am Standort einer Papierfabrik, umfassend eine erste Stufe (2) zur katalytischen Hydrierung mindestens eines Anthrachinonderivats, das in einem Gemisch aus organischen Lösungsmitteln gelöst ist, eine zweite Stufe (3) zur Oxidation der erhaltenen, hydrierten Arbeitslösung durch Einleiten eines Sauerstoff enthaltenden Gemischs, wie Luft, in die Arbeitslösung, um eine oxidierte Arbeitslösung zu erhalten, und eine dritte Stufe (5) zur Extraktion von Wasserstoffperoxid aus der oxidierten Arbeitslösung durch Einleiten von Wasser im Gegenstrom zu der oxidierten Arbeitslösung, wobei Mittel zum Einleiten eines Wasserstoff enthaltenden Gases in die erste Stufe und von Hilfswasser in die zweite Stufe vorgesehen sind, **dadurch gekennzeichnet**, daß die Mittel zum Einleiten des Wasserstoff enthaltenden Gases einen Ejektor (21) umfassen, der aus einem Drosselrohr besteht, das mit einer Leitung (24) zur Zuführung von Wasserstoff und mit Mitteln (23) zur Versorgung des Ejektors mit unter Druck stehendem, aus der Papierfabrik (1) stammenden Wasserdampf verbunden ist, so daß der Wasserdampf das Wasserstoff enthaltende Gas so zu der ersten Stufe mitführt, daß es sich nach Durchströmen der Drosselung entspannt.

2. Vorrichtung nach Anspruch 1, dadurch gekennzeichnet, daß die erste Stufe (2) zur Hydrierung in ihrem oberen Bereich mit einer Zuleitung (34) ausgestattet ist, die mit einem Ventil (35) versehen ist und mit einer Inertgasquelle verbunden ist, um das Einleiten eines Inertgases in den Gas enthaltenden Kopf der ersten Stufe (2) zu ermöglichen.

3. Vorrichtung nach Anspruch 1 oder 2, dadurch gekennzeichnet, daß die Mittel zum Einleiten von Hilfsluft einen zweiten Ejektor (21') umfassen, der mit einer Leitung (37) für die Zufuhr von Hilfsluft in die zweite Stufe (3) und mit Mitteln zur Versorgung dieses Injektors mit unter Druck stehenden, aus der Papierfabrik (1) stammenden Wasserdampf verbunden ist, so daß bei Bedarf der Wasserdampf die Hilfsluft zu der zweiten Stufe (3) mitführen kann.

4. Vorrichtung nach einem der Ansprüche 1 bis 3, dadurch gekennzeichnet, daß jeder Injektor (21, 21') an seinem Auslaß in einen Kondensator (27, 27') mündet, der selbst mit einer Kondensatabscheidevorrichtung (29, 29') verbunden ist, in der der Wasserdampf kondensiert und von wo das Gas in die entsprechende Stufe (2 oder 3) geleitet wird.

5. Vorrichtung nach einem der Ansprüche 1 bis 4, dadurch gekennzeichnet, daß die zweite Stufe (2) einen Verteiler für Wasserstoff aufweist, der aus einer Platte oder einem Rohr (36) besteht, die oder das mit Löchern eines Durchmessers von ungefähr 0,5 bis 3 mm versehen ist.
